(19) Europäisches Patentamt
European Patent Office
Office européen des brevets

(11) **EP 2 200 312 A1**

(12) **EUROPEAN PATENT APPLICATION**
published in accordance with Art. 153(4) EPC

(43) Date of publication:
**23.06.2010 Bulletin 2010/25**

(21) Application number: **08839973.8**

(22) Date of filing: **06.10.2008**

(51) Int Cl.:
*H04N 7/18* (2006.01)  *B60R 1/00* (2006.01)
*B60R 11/02* (2006.01)  *G06T 1/00* (2006.01)
*G06T 3/00* (2006.01)  *G09G 5/00* (2006.01)
*G09G 5/14* (2006.01)  *G09G 5/377* (2006.01)

(86) International application number:
**PCT/JP2008/068152**

(87) International publication number:
**WO 2009/051028 (23.04.2009 Gazette 2009/17)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **19.10.2007 JP 2007272654**

(71) Applicant: **Kabushiki Kaisha Toyota Jidoshokki Kariya-shi, Aichi 448-8671 (JP)**

(72) Inventors:
• **SHIMAZAKI, Kazunori**
**Kariya-shi**
**Aichi 448-8671 (JP)**

• **KIMURA, Tomio**
**Kariya-shi**
**Aichi 448-8671 (JP)**
• **NAKASHIMA, Yutaka**
**Kariya-shi**
**Aichi 448-8671 (JP)**
• **TOMIOKA, Masami**
**Kariya-shi**
**Aichi 448-8671 (JP)**

(74) Representative: **TBK-Patent**
**Bavariaring 4-6**
**80336 München (DE)**

(54) **VIDEO DISPLAY DEVICE AND VIDEO DISPLAY METHOD**

(57)    Images are taken by a fixed camera (A) and a moving camera (B), and a relative position calculation unit (1) recognizes a current position and orientation of the moving object (U) based on a detection signal that is input from a sensor for obtaining positional information of a moving object (U) and calculates a relative positional relationship of the moving camera (B) with respect to the fixed camera (A) by comparing the current position and orientation of the moving object (U) with a given position at which the fixed camera (A) is installed. Based on the relative positional relationship, the image taken by the fixed camera (A) and the image taken by the moving camera (B) are synthesized into one image by an image composition unit (2), and a composite image viewed from a virtual viewpoint (P) is displayed on a monitor (3).

FIG. 1

EP 2 200 312 A1

## Description

Technical Field

The present invention relates to an image display apparatus and an image display method, and more particularly, to an apparatus and method for synthesizing images taken by a plurality of cameras into one image and displaying the image.

Background Art

JP 09-114979 A proposes a camera system in which a subject is taken by a plurality of cameras located at different positions from each other and a plurality of the images taken by these cameras are used to generate a virtual image viewed from a viewpoint different from the viewpoints of the respective cameras. The three-dimensional position coordinates of the subject in the image taken by each of the cameras is obtained, and an image viewed from an arbitrary viewpoint is reconstructed based on these coordinates.

Disclosure of the Invention

Problem to Be Solved by the Invention

However, with respect to the system disclosed in JP 09-114979 A, the images taken by a plurality of cameras each having fixed positions are used to generate virtual images from different viewpoints. Accordingly, for example, in a case of parking a vehicle into a parking space, if the virtual image such as an overhead image and so on that enable a comfortable driving operation is generated, a plurality of cameras each having fixed positions in the parking space side must be installed. This causes such problems that space for installing the plurality of cameras is required, that costs are increased by installing a plurality of cameras, and that it takes time to install a plurality of cameras.
Recently, with the aim of improving the safety and operability of driving, a system has been used in which some cameras for taking the images of the rear part and the side part of a vehicle are mounted on the vehicle and the images taken by the cameras are displayed on a monitor located at the driver's seat at the time of, for example, backing the vehicle up.
By utilizing the aforementioned cameras that are mounted on a vehicle and installing only one fixed camera installed in the parking space side so as to be able to generate an overhead image, the driving operation at the time of parking can be easily and cheaply made more comfortable. However, since the movement of the vehicle changes the relative positional relationship between the cameras mounted on the vehicle and the fixed camera installed in the parking space side, it is difficult for the system disclosed in JP 09-114979 A to generate overhead images or the like.

The present invention has been made to solve the above-mentioned problem in the conventional art, and therefore has an object of providing an image display method that can display an image viewed from a given viewpoint even if a plurality of cameras having a variable relative positional relationship between each other are used.

Means for Solving the Problems

The present image display apparatus comprises: a plurality of cameras for which the relative positional relationship changes; a relative position calculation unit for calculating the relative positional relationship of the plurality of cameras; an image composition unit for creating an image viewed from a given viewpoint by synthesizing images taken by the plurality of cameras based on the relative positional relationship calculated by the relative position calculation unit; and a monitor for displaying the image created by the image composition unit.
The present image display method comprises: calculating a relative positional relationship of a plurality of cameras, for which the relative positional relationship changes; creating an image viewed from a given viewpoint by synthesizing images taken by the plurality of cameras based on the calculated relative positional relationship; and displaying the created image viewed from the given viewpoint.

Effect of the Invention

According to the present invention, because the relative positional relationship of the plurality of cameras is calculated by the relative position calculation unit and the images taken by the plurality of cameras are synthesized by the image composition unit based on the relative positional relationship, an image viewed from a given viewpoint can be displayed even if a plurality of cameras having a variable relative positional relationship between each other are used.

Brief Description of the Drawings

FIG. 1 is a block diagram illustrating a configuration of an image display apparatus according to Embodiment 1 of the present invention;
FIG. 2 is a flow chart illustrating an operation according to Embodiment 1 of the present invention;
FIG. 3 is a block diagram illustrating a configuration of an image display apparatus according to Embodiment 2 of the present invention;
FIG. 4 is a block diagram illustrating a configuration of a relative position calculation unit according to Embodiment 2 of the present invention;
FIG. 5 is a diagram illustrating a mark used in Embodiment 2 of the present invention;

FIG. 6 is a flow chart illustrating an operation of a step for calculating a relative positional relationship between a moving camera and a fixed camera according to Embodiment 2 of the present invention;

FIG. 7 is a block diagram illustrating a configuration of an image display apparatus according to Embodiment 3 of the present invention;

FIG. 8 is a flow chart illustrating an operation according to Embodiment 3 of the present invention;

FIG. 9 is a diagram illustrating a screen of a monitor according to Embodiment 3 of the present invention;

FIG. 10 is a diagram illustrating a screen of the monitor according to Embodiment 3 of the present invention;

FIG. 11 is a block diagram illustrating a configuration of an image display apparatus according to Embodiment 4 of the present invention;

FIG. 12 is a block diagram illustrating a configuration of a relative position calculation unit according to Embodiment 4 of the present invention;

FIG. 13 is a flow chart illustrating an operation according to Embodiment 4 of the present invention; and

FIG. 14 is a block diagram illustrating a configuration of an image display apparatus according to Embodiment 4 of the present invention.

Best Mode for Carrying Out the Invention

Hereinafter, Embodiments according to the present invention are described with reference to the accompanying drawings.

Embodiment 1

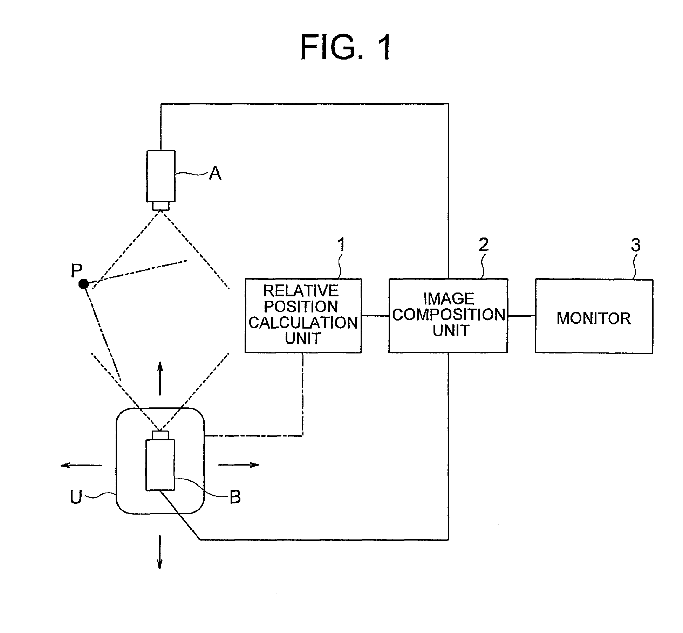

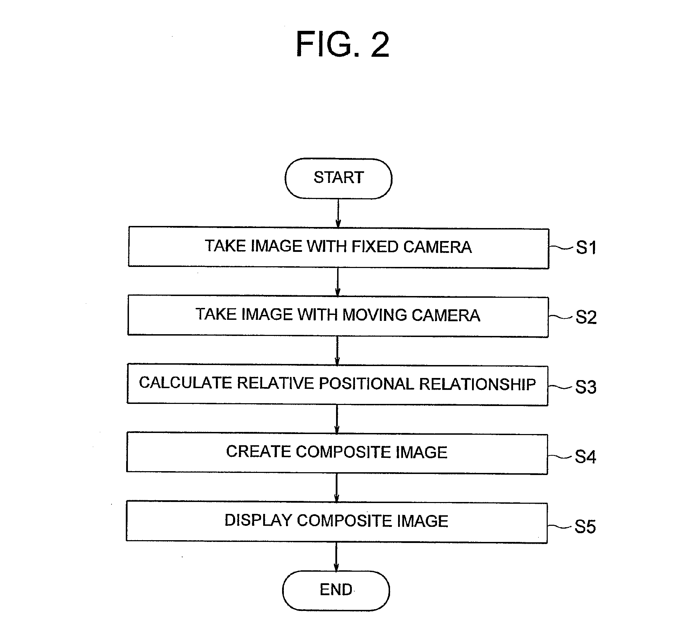

FIG. 1 illustrates a configuration of an image display apparatus according to Embodiment 1 of the present invention. A fixed camera A is previously installed at a given place, and also, a moving camera B is located at a place different from the place of the fixed camera A. The moving camera B is mounted on a moving object U such as a vehicle and so on and is configured to be movable along with the moving object U.
The moving object U is connected to a relative position calculation unit 1 that calculates a relative positional relationship of the moving camera B with respect to the fixed camera A. The relative position calculation unit 1, the fixed camera A, and the moving camera B are connected to an image composition unit 2. Furthermore, the image composition unit 2 is connected to a monitor 3.
Furthermore, the moving object U includes a sensor (not shown) for obtaining positional information such as its own current position, orientation and so on, and a detection signal from the sensor is input to the relative position calculation unit 1.
Next, referring to the flow chart of FIG. 2, an operation according to Embodiment 1 of the present invention is described. First, in Step S1, an image is taken by the fixed camera A, and in the subsequent Step S2, an image is taken by the moving camera B.
Furthermore, in Step S3, the relative positional relationship of the moving camera B with respect to the fixed camera A is calculated by the relative position calculation unit 1. At this point, because the detection signal from the sensor for obtaining the positional information of the moving object U has been input to the relative position calculation unit 1, the relative position calculation unit 1 can recognize the current position and orientation of the moving object U based on the input detection signal. Then, by comparing the current position and orientation of the moving object U with the given place at which the fixed camera A is installed, the relative position calculation unit 1 calculates the relative positional relationship of the moving camera B with respect to the fixed camera A.
After the relative positional relationship between the fixed camera A and the moving camera B is calculated as described above, in Step S4, the image composition unit 2 synthesizes the image taken by the fixed camera A and the image taken by the moving camera B into one image based on the relative positional relationship, thereby creating an overhead image which is a composite image viewed downward.
Next, in Step S5, the overhead image is displayed on the monitor 3.
It should be noted that, as an example of synthesizing the image taken by the fixed camera A and the image taken by the moving camera B and creating the overhead image, there can be mentioned JP 03-099952 A.
Furthermore, as the sensor for obtaining the positional information of the moving object U, any sensor can be employed as long as it can recognize the current position and orientation of the moving object U. Examples of the sensor include; a speed sensor or a distance amount sensor and a yaw-rate sensor; a GPS sensor and a yaw-rate sensor; and two GPS sensors mounted at different positions of the moving object U.
The relative position calculation unit 1, the image composition unit 2 and the monitor 3 can be mounted on the moving object U. In this case, the fixed camera A and the image composition unit 2 may be connected by wire or by wireless. When the fixed camera A and the image composition unit 2 are connected by wireless, communication means has to be provided with both the fixed camera A and the image composition unit 2 respectively.
Furthermore, the relative position calculation unit 1, the image composition unit 2 and the monitor 3 may be installed at a given place instead of being mounted on the moving object U. In this case, the sensor for obtaining the positional information of the moving object U is connected to the relative position calculation unit 1 by wire or by wireless, and also, the fixed camera A and the moving camera B are connected to the image composition unit 2 by wire or by wireless.

Further, only the relative position calculation unit 1 may be mounted on the moving object U while the image composition unit 2 and the monitor 3 are installed at a given place. Otherwise, the relative position calculation unit 1 and the image composition unit 2 may be mounted on the moving object U while only the monitor 3 is installed at a given place.

Embodiment 2

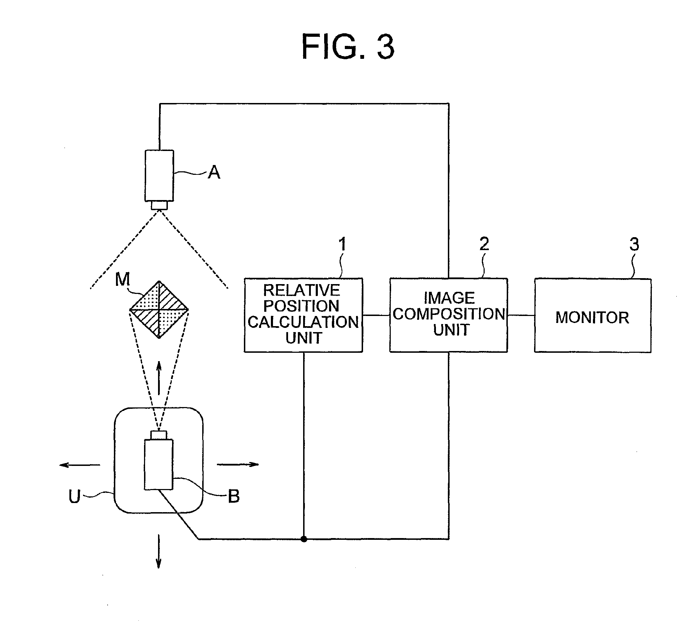

FIG. 3 illustrates a configuration of an image display apparatus according to Embodiment 2 of the present invention. The image display apparatus according to Embodiment 2 of the present invention is configured such that in the image display apparatus according to Embodiment 1 of the present invention illustrated in FIG. 1, a mark M is previously set as a fixed target at a given fixed position instead of the sensor for obtaining the positional information provided with the moving object U and the relative position calculation unit 1 calculates the relative positional relationship between the fixed camera A and the moving camera B based on the image of the mark M taken by the moving camera B.

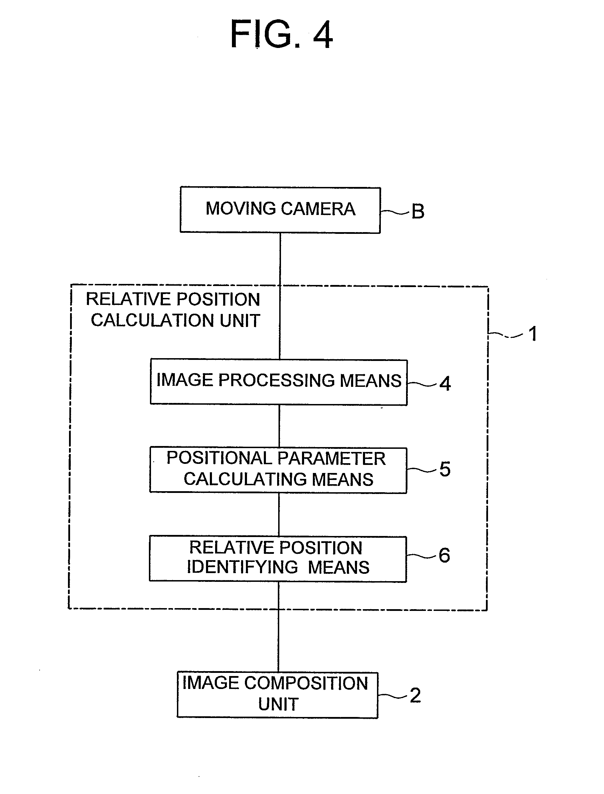

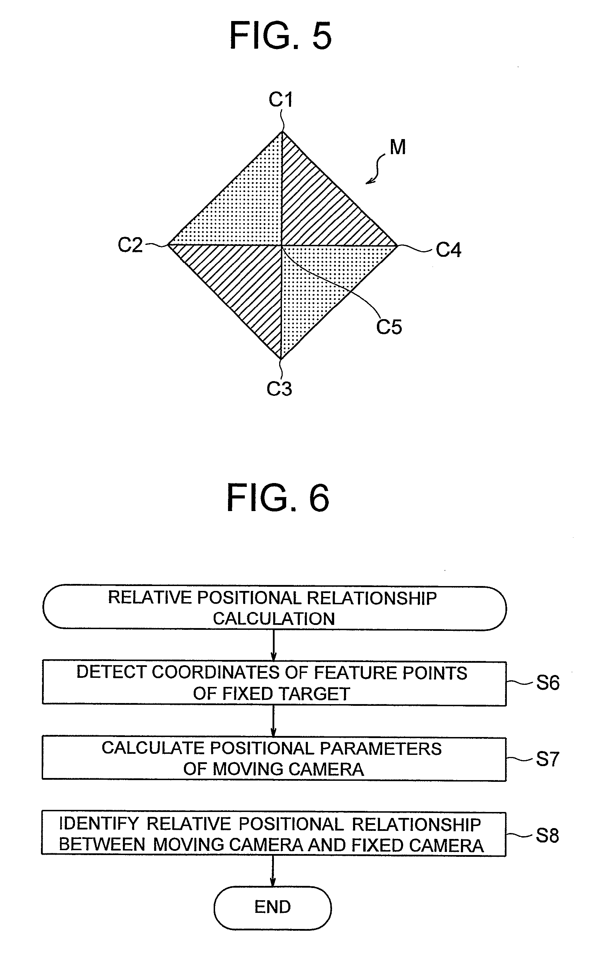

As illustrated in FIG. 4, the relative position calculation unit 1 includes image processing means 4, positional parameter calculating means 5 and relative position identifying means 6, which are connected to the moving camera B in the stated order. It is assumed that the mark M as the fixed target is fixed at a given place having a given positional relationship with respect to the fixed camera A and that the given positional relationship of the mark M with respect to the fixed camera A is previously recognized. For the mark M, as illustrated in FIG. 5, for example, a figure having a square shape that is obtained by making four isosceles right triangles abut against one another may be used. The isosceles right triangles adjacent to each other are colored with different colors, and the mark M has five feature points C1 to C5, which are each intersections of a plurality of sides.
As described above, as long as the positional relationship of the mark M with respect to the fixed camera A is previously recognized, the mark M may be placed outside the field of view of the fixed camera A.

Similarly, in Embodiment 2, a composite image such as an overhead image and so on is displayed on the monitor 3 in accordance with Steps S1 to S5 of the flow chart illustrated in FIG. 2. However, the calculation method for the relative positional relationship between the fixed camera A and the moving camera B in Step S3 is different from the calculation method according to Embodiment 1 of the present invention. In accordance with Steps S6 to S8 illustrated in the flow chart of FIG. 6, the calculation of the relative positional relationship is performed as follows.

At first, in Step S6, the image processing means 4 of the relative position calculation unit 1 extracts the five feature points C1 to C5 of the mark M from the image of the mark M taken by the moving camera B, and then detects and obtains two-dimensional coordinates of each of the feature points C1 to C5 on the image.
Next, in Step S7, based on the two-dimensional coordinates of the respective feature points C1 to C5 detected by the image processing means 4, the positional parameter calculating means 5 calculates positional parameters including six parameters which are three-dimensional coordinates (x, y, z), a tilt angle (angle of depression), a pan angle (angle of direction), and a swing angle (angle of rotation).

Here, the calculation method for the positional parameters by the positional parameter calculating means 5 is described.
First, a point on the ground, which moves in a downward direction perpendicular to the road surface from a given point on the moving object U, is set as an origin O, a road surface coordinate system in which an x-axis and a y-axis are set in the horizontal direction and a z-axis is set in the vertical direction is assumed, and an image coordinate system in which an X-axis and a Y-axis are set on the image taken by the moving camera B is assumed.
Coordinate values $Xm$ and $Ym$ (m=1 to 5) of the feature points C1 to C5 of the mark M in the image coordinate system are expressed, with the six positional parameters of the respective feature points C1 to C5 of the mark M in the road surface coordinate system, that is, coordinate values $xm$, $ym$, and $zm$, angle parameters $Kn$ (n=1 to 3) of the tilt angle (angle of depression), the pan angle (angle of direction), and the swing angle (angle of rotation), by using functions F and G as follows:

$$Xm = F(xm,\ ym,\ zm,\ Kn) + DXm$$

$$Ym = G(xm,\ ym,\ zm,\ Kn) + DYm,$$

where $DXm$ is the deviation between the X coordinate of each of the feature points C1 to C5 calculated by means of the functions F and G and the coordinate value $Xm$ of each of the feature points C1 to C5 detected by the image processing means 4 and where $DYm$ is the deviation between the Y coordinate of each of the feature points C1 to C5 calculated by means of the functions F and G and the coordinate value $Ym$ of each of the feature points C1 to C5 detected by the image processing means 4.

Specifically, by expressing the X-coordinate and the Y-coordinate of each of the five feature points C1 to C5, a total of ten relational expressions are created with respect to the six positional parameters ($xm$, $ym$, $zm$, $Kn$).
Here, positional parameters ($xm$, $ym$, $zm$, $Kn$) which minimize the sum of squares S of the deviations $DXm$ and $DYm$, which is expressed as follows:

$$S=\sum(DXm2+DYm2),$$

are obtained. In other words, an optimization problem for minimizing S is solved. Well-known optimization methods such as a simplex method, steepest descent method, Newton method, quasi-Newton method and so on may be used.

Because the positional parameters are determined by creating more relational expressions than the number (six) of the positional parameters (xm, ym, zm, Kn) to be calculated, it is possible to obtain the positional parameters (xm, ym, zm, Kn) with high accuracy. In Embodiment 2 of the present invention, ten relational expressions are created by the five feature points C1 to C5 with respect to the six positional parameters (xm, ym, zm, Kn). However, the number of relational expressions merely has to be more than the number of the positional parameters (xm, ym, zm, Kn) to be calculated. Accordingly, if six relational expressions are created by at least three feature points, the six positional parameters (xm, ym, zm, Kn) can be calculated.

By using the positional parameters of the moving camera B calculated in the aforementioned manner, in Step S8, the relative position identifying means 6 identifies the relative positional relationship of the moving camera B with respect to the fixed camera A. Specifically, based on the positional parameters calculated by the positional parameter calculating means 5, the relative positional relationship between the moving camera B and the mark M is identified. Furthermore, the relative positional relationship between the moving camera B and the fixed camera A is identified because the given positional relationship of the mark M with respect to the fixed camera A is previously recognized.

The relative positional relationship between the fixed camera A and the moving camera B, which has been calculated by the relative position calculation unit 1 in the aforementioned manner, is transmitted to the image composition unit 2. The image composition unit 2 combines, based on the relative positional relationship, the image taken by the fixed camera A and the image taken by the moving camera B into one image to create an overhead image, which is then displayed on the monitor 3.

In Embodiment 2 of the present invention, the positional parameters including the six parameters which are the three-dimensional coordinates (x, y, z) of the moving camera B with reference to the mark M, the tilt angle (angle of depression), the pan angle (angle of direction), and the swing angle (angle of rotation) are calculated. Accordingly, even if there is a step or a tilt between the floor surface on which the mark M is located and the road surface on which the moving object U is currently located, the relative positional relationship between the mark M and the moving camera B, and further, the relative positional relationship between the fixed camera A and the moving camera B are accurately identified, thereby enabling creation of an overhead image with high accuracy.

However, when there is no tilt between the floor surface on which the mark M is located and the road surface on which the moving object U is currently located, by calculating the positional parameters including at least four parameters which are the three-dimensional coordinates (x, y, z) of the moving camera B with reference to the mark M and the pan angle (angle of direction), the relative positional relationship between the mark M and the moving camera B can be identified. In this case, four positional parameters can be obtained by creating four relational expressions by means of two-dimensional coordinates of at least two feature points of the mark M. However, it is desirable that two-dimensional coordinates of more feature points are used to calculate the four positional parameters for higher accuracy by a least-squares method or the like.

Furthermore, in a case where the mark M and the moving object U are on the same plane and there is no step or tilt between the floor surface on which the mark M is located and the road surface on which the moving object U is currently located, by calculating the positional parameters including at least three parameters the two-dimensional coordinates (x, y) of the moving camera B with reference to the mark M and the pan angle (angle of direction), the relative positional relationship between the mark M and the moving camera B can be identified. Similarly, in this case, three positional parameters can be obtained by creating four relational expressions by means of two-dimensional coordinates of at least two feature points of the mark M. However, it is desirable that two-dimensional coordinates of more feature points are used to calculate the three positional parameters for higher accuracy by a least-squares method or the like.

Embodiment 3

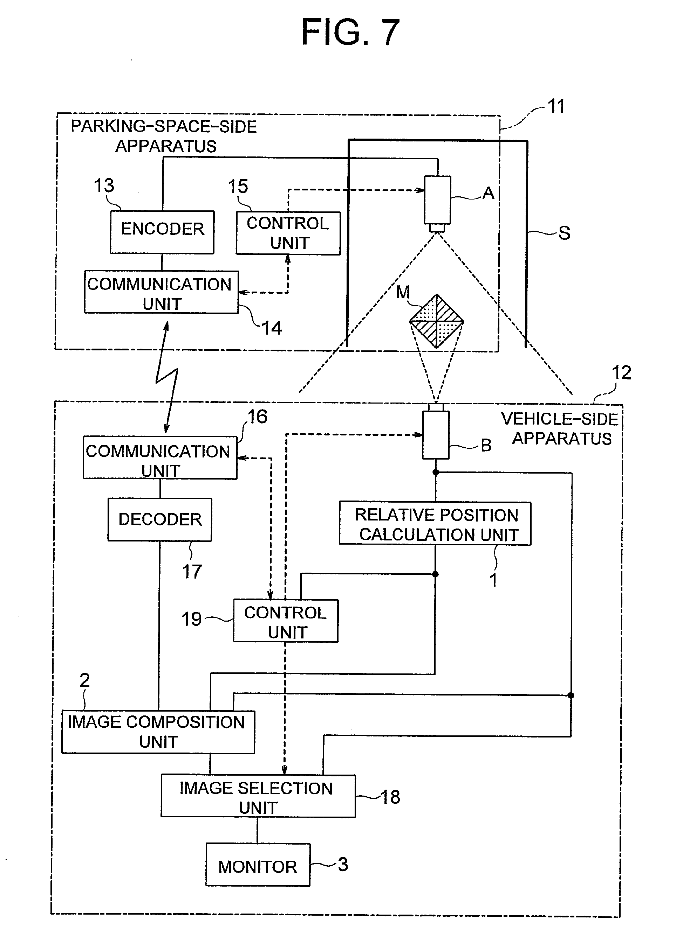

FIG. 7 illustrates a configuration of an image display apparatus according to Embodiment 3 of the present invention. Embodiment 3 shows an example using the image display apparatus according to Embodiment 2 illustrated in FIG. 2 for parking support with the fixed camera A being installed in a parking space such as a garage and so on and the moving camera B being mounted on a vehicle to be parked in the parking space. A parking-space-side apparatus 11 is provided within a parking space S or in the vicinity thereof, and a vehicle-side apparatus 12 is mounted on the vehicle to be parked in the parking space S.

The parking-space-side apparatus 11 includes the fixed camera A located at the back of the parking space S to take an image of the vicinity of an entrance of the parking space S, and the fixed camera A is connected to a communication unit 14 via an encoder 13. The encoder 13 is for compressing an image taken by the fixed camera A into a format suitable for wireless transmission. The communication unit 14 is mainly for transmitting image data compressed by the encoder 13 to the vehicle-side apparatus 12. A control unit 15 is connected to the fixed camera A and the communication unit 14. Furthermore, the parking-space-side apparatus 11 includes the mark M fixedly provided on the floor surface in the vicinity of the entrance of the parking space S.

It is assumed that internal parameters (focal length, strain constant, and the like) and external parameters (relative position, angle, and the like, with respect to the parking space S) of the fixed camera A are previously known. Similarly, it is assumed that the relative position of the mark M with respect to the fixed camera A is known.

On the other hand, the vehicle-side apparatus 12 includes the moving camera B provided at the rear of the vehicle to take an image behind the vehicle. At the time of backing into the parking space S, an image of the mark M in the parking space S is taken by the moving camera B. The moving camera B is connected to the relative position calculation unit 1. Furthermore, the vehicle-side apparatus 12 includes a communication unit 16 for communicating with the communication unit 14 of the parking-space-side apparatus 11, and the communication unit 16 is connected to a decoder 17. The decoder 17 is for decoding the compressed image data received by the communication unit 16 from the parking-space-side apparatus 11.

The decoder 17 is connected to the image composition unit 2. An image selection unit 18 is connected to both the image composition unit 2 and the moving camera B. The image selection unit 18 is connected to the monitor 3 located at the driver's seat of the vehicle.

Furthermore, a control unit 19 is connected to the moving camera B, the relative position calculation unit 1, the communication unit 16, and the image selection unit 18.

It is assumed that internal parameters (focal length, strain constant, and the like) of the moving camera B and the relative position and angle of the moving camera B with respect to the vehicle are previously known.

As illustrated in FIG. 4, the relative position calculation unit 1 of the vehicle-side apparatus 12 includes the image processing means 4, the positional parameter calculating means 5, and the relative position identifying means 6, which are connected in the stated order between the moving camera B and the image composition unit 2.

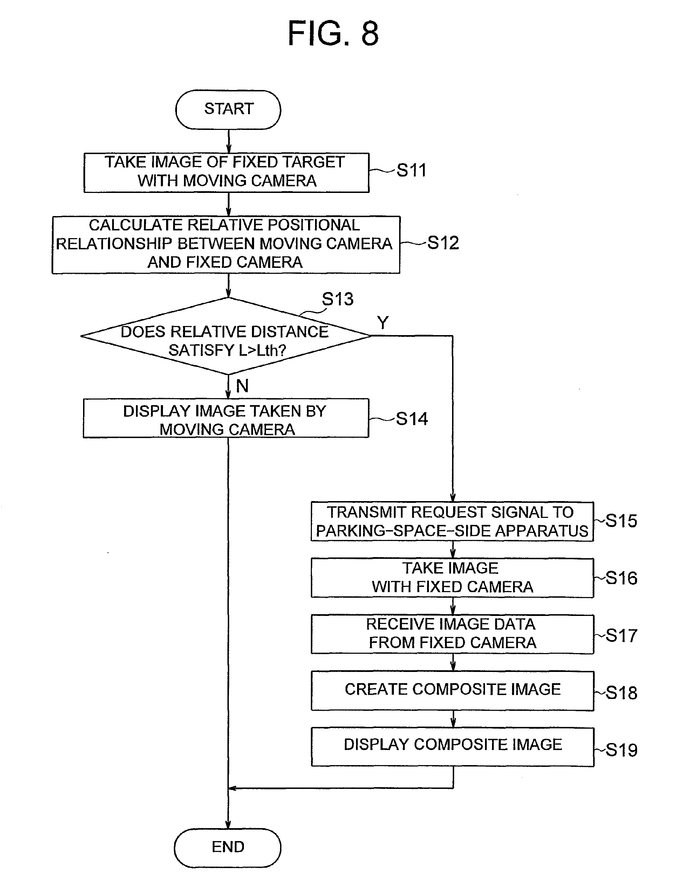

Next, with reference to the flow chart of FIG. 8, an operation according to Embodiment 3 is described.

First, in Step S11, in a state where the vehicle is located in the vicinity of the parking space S so that the mark M is within the field of view of the moving camera B, the control unit 19 of the vehicle-side apparatus 12 operates the moving camera B to take an image of the mark M.

The image taken by the moving camera B is input to the relative position calculation unit 1. In the subsequent Step S12, the relative position calculation unit 1 calculates the relative positional relationship between the moving camera B and the fixed camera A according to the flow chart illustrated in FIG. 6.

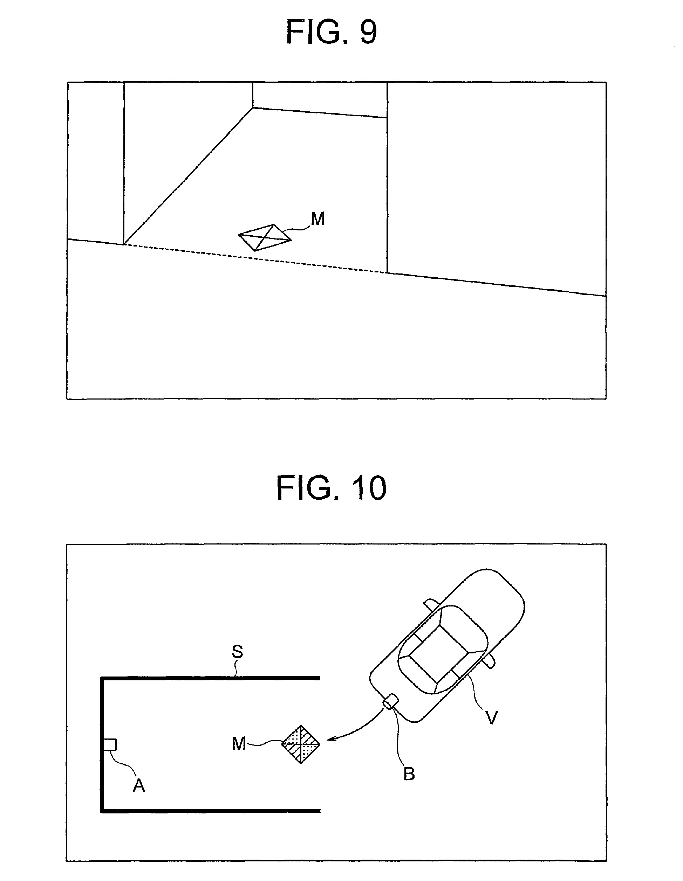

Accordingly, based on the relative positional relationship calculated by the relative position calculation unit 1, the control unit 19 calculates a relative distance L of the moving camera B with respect to the fixed camera A. In Step S13, the relative distance L is compared with a given value Lth, and when the relative distance L is larger than the given value Lth, the control unit 19 causes the image selection unit 18 to select the image data from the moving camera B in Step S14. Consequently, as illustrated in FIG. 9, an image of the area behind the vehicle, which has been taken by the moving camera B, is displayed on the screen of the monitor 3 located at the driver's seat.

On the other hand, when the relative distance L of the moving camera B with respect to the fixed camera A is less than or equal to the given value Lth, the control unit 19 transmits a request signal for the image data from the communication unit 16 to the parking-space-side apparatus 11 in Step S15.

In the parking-space-side apparatus 11, when the communication unit 14 receives the request signal for the image data from the vehicle-side apparatus 12, the control unit 15 operates the fixed camera A, thereby taking an image of the vicinity of the entrance of the parking space S in Step S16. Then, after the image data taken by the fixed camera A is compressed by the encoder 13 into a format suitable for wireless transmission, the compressed image data is transmitted from the communication unit 14 to the vehicle-side apparatus 12.

In Step 17, after the image data from the parking-space-side apparatus 11 is received by the communication unit 16 of the vehicle-side apparatus 12, the image data is decoded by the decoder 17, and then transmitted to the image composition unit 2.

In Step S18, the image composition unit 2 synthesizes the image taken by the fixed camera A and the image taken by the moving camera B into one image to thereby create an overhead image based on the relative positional relationship between the fixed camera A and the moving camera B.

In Step S19, because the relative distance L of the moving camera B with respect to the fixed camera A is less than or equal to the given value Lth, the control unit 19 causes the image selection unit 18 to select the image data from the image composition unit 2. Consequently, as illustrated in FIG. 10, the overhead image created by the image composition unit 2 is displayed on the screen of the monitor 3 located at the driver's seat.

It should be noted that the given value Lth used in Step S13 may be set as follows. For example, after assuming a garage in which the both sides and the rear side of the parking space S are divided by walls or the like, the given value Lth is set with reference to a relative distance between the moving camera B and the fixed camera A when a part of a vehicle V during backward parking begins to enter the field of view of the fixed camera A.

If the given value Lth is set in the aforementioned manner, the image of the area behind the vehicle taken by the moving camera B is displayed on the screen of the monitor 3 as illustrated in FIG. 9 when the vehicle V is not within the field of view of the fixed camera A, whereas after the vehicle V enters the field of view of the fixed camera A, as illustrated in FIG. 10, the overhead image is displayed on the screen of the monitor 3. Accordingly, operation of the vehicle V can be performed while checking the overhead image displayed on the screen of the monitor 3, thereby making it easier to recognize the relative positional relationship between the vehicle V and the parking space S. As a result, it becomes possible to park the vehicle V into the parking space S with higher accuracy.

Embodiment 4

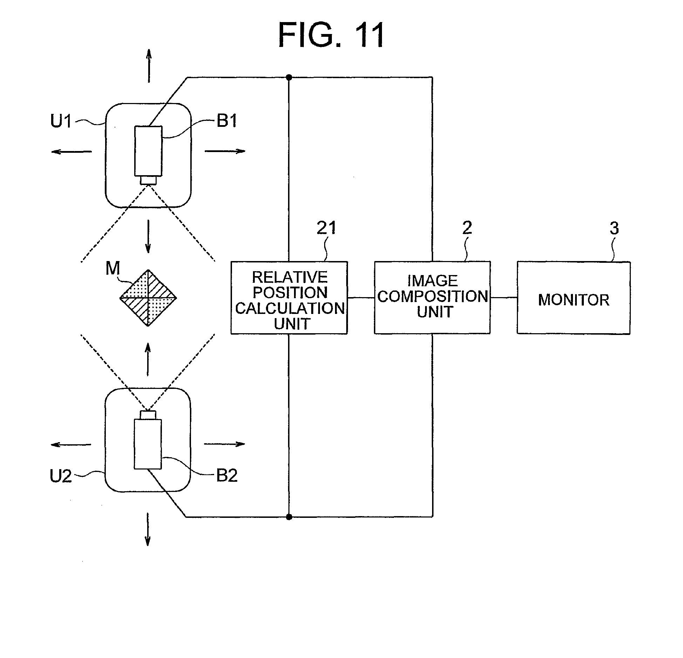

FIG. 11 illustrates a configuration of an image display apparatus according to Embodiment 4 of the present invention. The image display apparatus according to Embodiment 4 of the present invention is configured such that in the image display apparatus according to Embodiment 2 of the present invention illustrated in FIG. 3, a first moving camera B1 mounted on a first moving object U1 and a second moving camera B2 mounted on a second moving object U2 are arranged instead of the fixed camera A and the moving camera B and the moving cameras B1 and B2 are connected to a relative position calculation unit 21 instead of the relative position calculation unit 1 so as to take images of the same mark M by both the moving cameras B1 and B2.

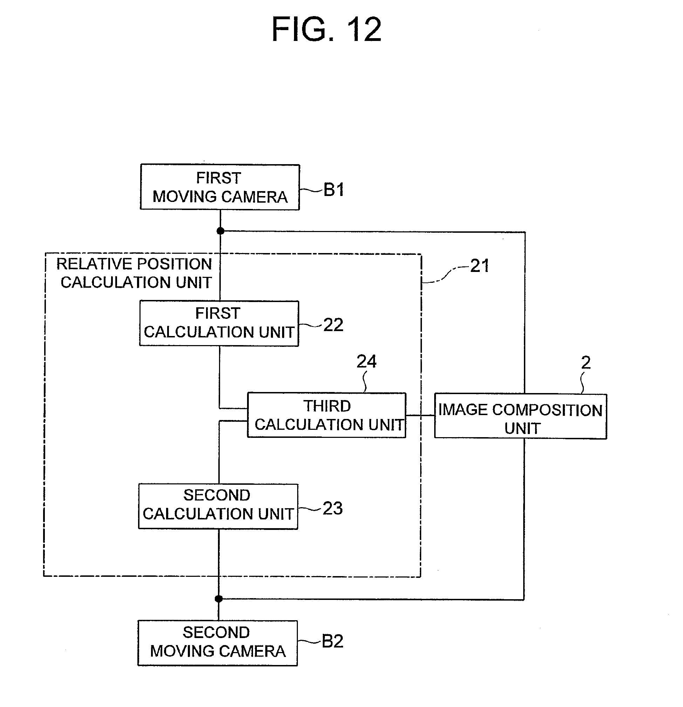

As illustrated in FIG. 12, the relative position calculation unit 21 includes a first calculation unit 22 connected to the first moving camera B1, a second calculation unit 23 connected to the second moving camera B2, and a third calculation unit 24 connected to the first calculation unit 22 and the second calculation unit 23. Furthermore, the third calculation unit 24 is connected to the image composition unit 2.

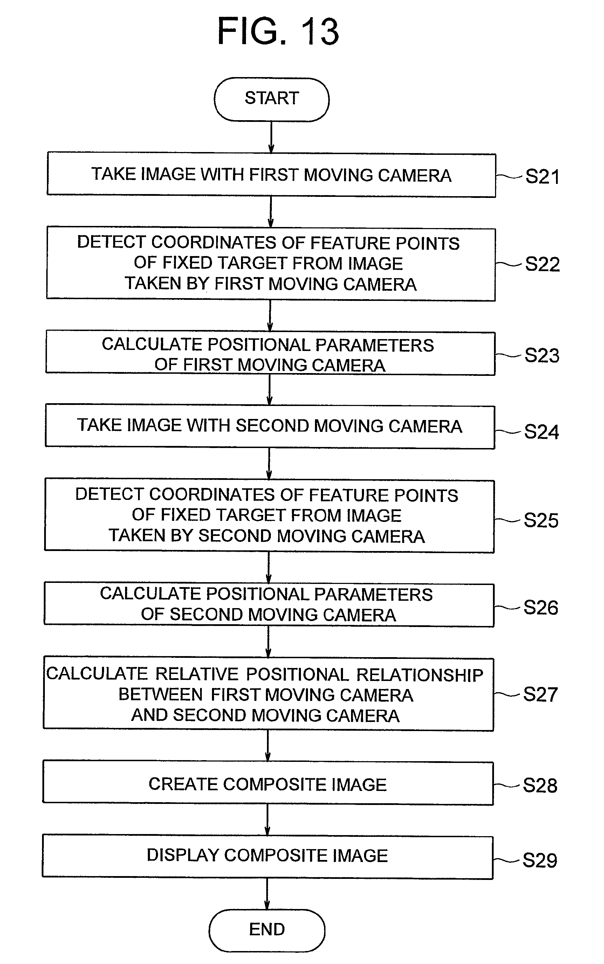

Next, with reference to the flow chart of FIG. 13, an operation according to Embodiment 4 of the present invention is described.
At first, in Step S21, in a state where the mark M is within the field of view of the first moving camera B1, an image is taken by the first moving camera B1. In the subsequent Step S22, the first calculation unit 22 of the relative position calculation unit 21 extracts five feature points C1 to C5 of the mark M from the image of the mark M taken by the first moving camera B1, and then detects and obtains two-dimensional coordinates of the respective feature points C1 to C5 of the image. Afterwards, in Step S23, based on the two-dimensional coordinates of the feature points C1 to C5, positional parameters including six parameters which are the three-dimensional coordinates (x, y, z) of the first moving camera B1 with reference to the mark M, the tilt angle (angle of depression), pan angle (angle of direction), and swing angle (angle of rotation) are calculated.

Next, in Step S24, in a state where the mark M is within the field of view of the second moving camera B2, an image is taken by the second moving camera B2. In the subsequent Step S25, the second calculation unit 23 of the relative position calculation unit 21 extracts the five feature points C1 to C5 of the mark M from the image of the mark M taken by the second moving camera B2, and then detects and obtains two-dimensional coordinates of the respective feature points C1 to C5 of the image. Afterwards, in Step S26, based on the two-dimensional coordinates of the feature points C1 to C5, positional parameters including six parameters which are the three-dimensional coordinates (x, y, z) of the second moving camera B2 with reference to the mark M, the tilt angle (angle of depression), the pan angle (angle of direction), and the swing angle (angle of rotation) are calculated.

Furthermore, in Step S27, the third calculation unit 24 of the relative position calculation unit 21 identifies the relative positional relationship between the first moving camera B1 and the second moving camera B2 based on the positional parameters of the first moving camera B1 and the second moving camera B2 calculated by the first calculation unit 22 and the second calculation unit 23 respectively.
The relative positional relationship between the first moving camera B1 and the second moving camera B2 calculated by the relative position calculation unit 21 is transmitted to the image composition unit 2 in the aforementioned manner, and in Step S28, the image composition unit 2 synthesizes the image taken by the first moving camera B1 and the image taken by the second moving camera B2 into one image based on the relative positional relationship, thereby creating an overhead image. In Step S29, the overhead image is displayed on the monitor 3.

Embodiment 5

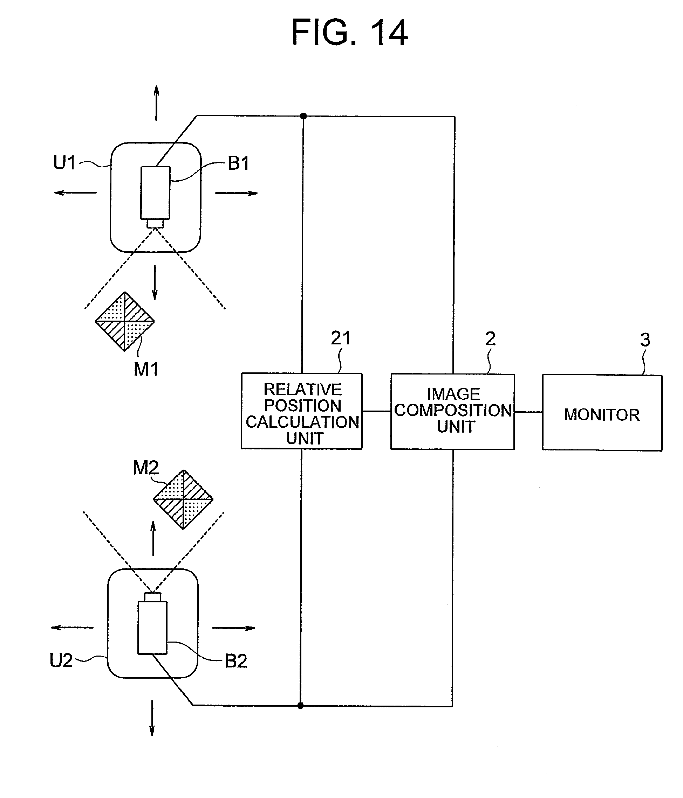

FIG. 14 illustrates a configuration of an image display apparatus according to Embodiment 5 of the present invention. The image display apparatus according to Embodiment 5 of the present invention is configured such that in the image display apparatus according to Embodiment 4 of the present invention illustrated in FIG. 11, instead of taking the images of the same mark M with the first moving camera B1 and the second moving camera B2, a plurality of marks M1 and M2 are arranged at different positions from each other and the first moving camera B1 and the second moving camera B2 each take an image of a mark different from each other.
It is assumed that the relative positional relationship between the mark M1 and the mark M2 is previously known. For example, the relative positional relationship between the mark M1 and the mark M2 may be stored in the relative position calculation unit 21. Alternatively, the marks M1 and M2 may be configured to record the respective positional information by means of a barcode or the like so that the positional information can be detected from the image taken by each camera. Still alternatively, the positional information of each of the marks M1 and M2 may be output from a wireless transmitter located in the vicinity of each mark, thereby allowing the positional information to be detected by receiving at the first moving object U1 and the second moving object U2.

In the case where the first moving camera B1 takes an image of the mark M1 and the second moving camera B2 takes an image of the mark M2, the first calculation unit 22 of the relative position calculation unit 21 calculates the positional parameters of the first moving camera B1 with reference to the mark M1 based on the image of the mark M1 taken by the first moving camera B1 and the second calculation unit 23 of the relative position calculation unit 21 calculates the positional parameters of the second moving camera B2 with reference to the mark M2 based on the image of the mark M2 taken by the second moving camera B2.

Here, because the relative positional relationship between the mark M1 and the mark M2 is previously recognized, the third calculation unit 24 of the relative position calculation unit 21 can identify the relative positional relationship between the first moving camera B1 and the second moving camera B2 based on the respective positional parameters calculated by the first calculation unit 22 and the second calculation unit 23 and the relative positional relationship between the marks M1 and M2.

As a result, the image composition unit 2 can synthesize the image taken by the first moving camera B1 and the image taken by the second moving camera B2 into one image based on the relative positional relationship, thereby creating an overhead image which is then displayed on the monitor 3.

In a case where the mark photographed by each of the moving cameras B1 and B2 is not specified as one of the marks M1 and M2, or in a case where both the marks M1 and M2 are photographed at the same time, in order to determine whether the photographed mark is the mark M1 or the mark M2, it is desirable that the marks M1 and M2 be different from each other in shape, color, or the like.

Other embodiments

In each of Embodiments described above, the composite image created by the image composition unit 2 is not limited to the overhead image, and hence the image composition unit 2 can create an image viewed from an arbitrary virtual viewpoint P different from the viewpoint of each camera. Furthermore, the composite image is not necessarily limited to the image viewed from the virtual viewpoint P different from the viewpoint of each camera, and hence the image composition unit 2 can create an image viewed from the viewpoint of any one of a plurality of cameras. For example, in the aforementioned Embodiment 3 of the present invention, the image composition unit 2 may convert the image taken by the fixed camera A in the parking space side into an image viewed from the viewpoint of the moving camera B mounted on the vehicle, and synthesize the converted image with the image taken by the moving camera B, whereby it is possible to obtain a composite image that is added with a see-through area of such a blind spot within the parking space S as illustrated in FIG. 9, which is hidden from view by the wall in the image taken by the moving camera B mounted on the vehicle. In other cases, it is possible to obtain a composite image that is added with a blind spot area that is outside the shooting range in the image taken by the moving camera B mounted on the vehicle alone.

In the above-mentioned Embodiments of the present invention, the images taken by one fixed camera A and one moving camera B, or the images taken by two moving cameras B1 and B2 are synthesized. However, it is also possible to create an image viewed from the arbitrary virtual viewpoint P by synthesizing images taken by more than three cameras of which the relative positional relationships change.

Furthermore, the moving objects U, U1, and U2 are not limited to moving equipment such as a vehicle and so on but, for example, may be a person walking with a camera.

The mark used in Embodiments 2 to 5 of the present invention has a square-like shape obtained by making four isosceles right triangles abut to one another, but is not limited to such marks, as various kinds of marks may be used. However, it is desirable that the mark have a specific shape, color, or the like that makes it easier to identify against other shapes existing in the natural world, whereby the presence of the mark is easily recognized through image detection by the image processing means 4. Moreover, it is desirable that the feature points within the mark are easily detected.

Furthermore, it is desirable that the mark is sufficiently large for the relative positional relationship between the camera and the mark to be calculated with high accuracy based on the two-dimensional coordinates of the detected feature points and also that the mark is placed at a place where the mark cam be easily detected by the camera. Specifically, the mark may be placed in the vicinity of where the camera is located, such as a floor surface, a wall surface, a ceiling surface and so on.

**Claims**

1. An image display apparatus comprising:

   a plurality of cameras of which a relative positional relationship changes;
   a relative position calculation unit for calculating the relative positional relationship of the plurality of cameras;
   an image composition unit for creating an image viewed from a given viewpoint by synthesizing images taken by the plurality of cameras based on the relative positional relationship calculated by the relative position calculation unit; and
a monitor for displaying the image created by
the image composition unit.

2. An image display apparatus according to Claim 1,
wherein the plurality of cameras comprise at least
one moving camera and at least one fixed camera.

3. An image display apparatus according to Claim 1,
wherein each of the plurality of cameras is a moving
camera.

4. An image display apparatus according to Claim 2 or
3, further comprising a fixed target including at least
one feature point and previously placed at a given
fixed position,
wherein the relative position calculation unit:

   calculates a positional parameter of the moving
   camera with reference to the fixed target based
   on an image of the fixed target taken by the moving camera; and
   calculates the relative positional relationship of
   the moving camera with respect to the other
   cameras based on the calculated positional parameter.

5. An image display apparatus according to Claim 4,
wherein the fixed target is a mark with a given shape.

6. An image display apparatus according to any of
Claims 1 to 5, wherein the image composition unit
creates an image viewed from a virtual viewpoint different from viewpoints of the plurality of cameras as
an image viewed from the given viewpoint.

7. An image display apparatus according to Claim 6,
wherein the image composition unit creates an overhead image as an image viewed from the given viewpoint.

8. An image display apparatus according to any of
Claims 1 to 5, wherein the image composition unit
creates an image obtained by viewing from a viewpoint of any of the plurality of cameras and adding
an image to a blind spot area as an image viewed
from the given viewpoint.

9. An image display method comprising:

   calculating a relative positional relationship of a
   plurality of cameras, for which the relative positional relationship changes;
   creating an image viewed from a given viewpoint
   by synthesizing images taken by the plurality of
   cameras based on the calculated relative positional relationship; and
   displaying the created image viewed from the

given viewpoint.

# FIG. 1

# FIG. 2

```
                    ┌─────────────┐
                    │    START    │
                    └─────────────┘
                           │
                           ▼
    ┌──────────────────────────────────────────┐
    │      TAKE IMAGE WITH FIXED CAMERA         │ ~S1
    └──────────────────────────────────────────┘
                           │
                           ▼
    ┌──────────────────────────────────────────┐
    │     TAKE IMAGE WITH MOVING CAMERA         │ ~S2
    └──────────────────────────────────────────┘
                           │
                           ▼
    ┌──────────────────────────────────────────┐
    │  CALCULATE RELATIVE POSITIONAL RELATIONSHIP│ ~S3
    └──────────────────────────────────────────┘
                           │
                           ▼
    ┌──────────────────────────────────────────┐
    │          CREATE COMPOSITE IMAGE           │ ~S4
    └──────────────────────────────────────────┘
                           │
                           ▼
    ┌──────────────────────────────────────────┐
    │         DISPLAY COMPOSITE IMAGE           │ ~S5
    └──────────────────────────────────────────┘
                           │
                           ▼
                    ┌─────────────┐
                    │     END     │
                    └─────────────┘
```

# FIG. 3

# FIG. 4

```
         ┌─────────────────────────┐
         │     MOVING CAMERA       │──B
         └─────────────────────────┘
┌─ ─ ─ ─ ─ ─ ─ ─ ─│─ ─ ─ ─ ─ ─ ─ ─ ─ ─ ┐
│ RELATIVE POSITION                      
  CALCULATION UNIT                      │──1
│                                        
     ┌─────────────────────────┐        │
│    │ IMAGE PROCESSING MEANS  │──4      
     └─────────────────────────┘        │
│                 │                      
     ┌─────────────────────────┐        │
│    │  POSITIONAL PARAMETER   │──5      
     │   CALCULATING MEANS     │         │
│    └─────────────────────────┘        
                  │                     │
│    ┌─────────────────────────┐        
     │    RELATIVE POSITION    │──6      │
│    │   IDENTIFYING  MEANS    │         
     └─────────────────────────┘        │
└─ ─ ─ ─ ─ ─ ─ ─ ─│─ ─ ─ ─ ─ ─ ─ ─ ─ ─ ┘
         ┌─────────────────────────┐
         │    IMAGE COMPOSITION     │──2
         │         UNIT             │
         └─────────────────────────┘
```

# FIG. 5

# FIG. 6

| RELATIVE POSITIONAL RELATIONSHIP CALCULATION | |
|---|---|
| DETECT COORDINATES OF FEATURE POINTS OF FIXED TARGET | S6 |
| CALCULATE POSITIONAL PARAMETERS OF MOVING CAMERA | S7 |
| IDENTIFY RELATIVE POSITIONAL RELATIONSHIP BETWEEN MOVING CAMERA AND FIXED CAMERA | S8 |
| END | |

# FIG. 7

# FIG. 8

```
            ( START )
                │
                ▼
┌──────────────────────────────┐
│  TAKE IMAGE OF FIXED TARGET   │ ─── S11
│      WITH MOVING CAMERA        │
└──────────────────────────────┘
                │
                ▼
┌──────────────────────────────┐
│  CALCULATE RELATIVE POSITIONAL │
│ RELATIONSHIP BETWEEN MOVING CAMERA │ ─── S12
│       AND FIXED CAMERA         │
└──────────────────────────────┘
                │
                ▼            S13
          ╱─────────────────╲         Y
         ╱  DOES RELATIVE DISTANCE ╲──────────┐
         ╲   SATISFY L>Lth?       ╱            │
          ╲─────────────────╱                 │
                │ N                            │
                ▼                              ▼
┌──────────────────────────┐    ┌────────────────────────────────┐
│  DISPLAY IMAGE TAKEN BY   │─S14│  TRANSMIT REQUEST SIGNAL TO     │─S15
│      MOVING CAMERA        │    │ PARKING-SPACE-SIDE APPARATUS    │
└──────────────────────────┘    └────────────────────────────────┘
                │                              │
                │                              ▼
                │               ┌────────────────────────────────┐
                │               │        TAKE IMAGE               │─S16
                │               │     WITH FIXED CAMERA           │
                │               └────────────────────────────────┘
                │                              │
                │                              ▼
                │               ┌────────────────────────────────┐
                │               │     RECEIVE IMAGE DATA          │─S17
                │               │     FROM FIXED CAMERA           │
                │               └────────────────────────────────┘
                │                              │
                │                              ▼
                │               ┌────────────────────────────────┐
                │               │    CREATE COMPOSITE IMAGE       │─S18
                │               └────────────────────────────────┘
                │                              │
                │                              ▼
                │               ┌────────────────────────────────┐
                │               │    DISPLAY COMPOSITE IMAGE      │─S19
                │               └────────────────────────────────┘
                │                              │
                └──────────────┬───────────────┘
                               ▼
                           ( END )
```

# FIG. 9

# FIG. 10

# FIG. 11

# FIG. 12

```
┌─────────────────────┐
│      FIRST          │╮
│  MOVING CAMERA      │╯─B1
└─────────────────────┘
          │
          ├────────────────────────────────────────┐
┌ ─ ─ ─ ─ │─ ─ ─ ─ ─ ─ ─ ─ ─ ─ ─ ─ ─ ─ ─ ─ ─ ┐    │
│ RELATIVE POSITION                              │    │
│ CALCULATION UNIT                          ⌐21  │    │
│          │                                     │    │
│  ┌─────────────────┐╮                          │    │
│  │     FIRST       │╯─22                        │    │
│  │ CALCULATION UNIT│                            │    │
│  └─────────────────┘        24                  │    │
│          │                   ⌐                  │    │
│          │        ┌──────────────────┐   ┌──────────────────┐  ⌐2
│          ├────────│      THIRD       │───│ IMAGE COMPOSITION │
│          │        │ CALCULATION UNIT │   │       UNIT        │
│          │        └──────────────────┘   └──────────────────┘
│  ┌─────────────────┐╮                          │    │
│  │     SECOND      │╯─23                        │    │
│  │ CALCULATION UNIT│                            │    │
│  └─────────────────┘                           │    │
└ ─ ─ ─ ─ │─ ─ ─ ─ ─ ─ ─ ─ ─ ─ ─ ─ ─ ─ ─ ─ ─ ┘    │
          ├────────────────────────────────────────┘
┌─────────────────────┐
│      SECOND         │╮
│  MOVING CAMERA      │╯─B2
└─────────────────────┘
```

19

# FIG. 13

START

TAKE IMAGE WITH FIRST MOVING CAMERA — S21

DETECT COORDINATES OF FEATURE POINTS
OF FIXED TARGET FROM IMAGE
TAKEN BY FIRST MOVING CAMERA — S22

CALCULATE POSITIONAL PARAMETERS
OF FIRST MOVING CAMERA — S23

TAKE IMAGE WITH SECOND MOVING CAMERA — S24

DETECT COORDINATES OF FEATURE POINTS
OF FIXED TARGET FROM IMAGE
TAKEN BY SECOND MOVING CAMERA — S25

CALCULATE POSITIONAL PARAMETERS
OF SECOND MOVING CAMERA — S26

CALCULATE RELATIVE POSITIONAL RELATIONSHIP
BETWEEN FIRST MOVING CAMERA
AND SECOND MOVING CAMERA — S27

CREATE COMPOSITE IMAGE — S28

DISPLAY COMPOSITE IMAGE — S29

END

# FIG. 14

| | | |
|---|---|---|
| **INTERNATIONAL SEARCH REPORT** | International application No. | |
| | PCT/JP2008/068152 | |

A. CLASSIFICATION OF SUBJECT MATTER
$H04N7/18$(2006.01)i, $B60R1/00$(2006.01)i, $B60R11/02$(2006.01)i, $G06T1/00$ (2006.01)i, $G06T3/00$(2006.01)i, $G09G5/00$(2006.01)i, $G09G5/14$(2006.01)i, $G09G5/377$(2006.01)i

According to International Patent Classification (IPC) or to both national classification and IPC

B. FIELDS SEARCHED

Minimum documentation searched (classification system followed by classification symbols)
$H04N7/18$, $B60R1/00$, $B60R11/02$, $G06T1/00$, $G06T3/00$, $G09G5/00$, $G09G5/14$, $G09G5/377$

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2004-351977 A (Matsushita Electric Industrial Co., Ltd.),<br>16 December, 2004 (16.12.04),<br>Par. Nos. [0031] to [0067]; Figs. 1 to 17<br>(Family: none) | 1-3,6,8-9<br>4-5,7 |
| X<br>Y | JP 2003-319383 A (Equos Research Co., Ltd.),<br>07 November, 2003 (07.11.03),<br>Par. Nos. [0010] to [0057]; Figs. 1 to 12<br>(Family: none) | 1,3,6,8-9<br>4-5,7 |
| X<br>Y | JP 2002-367080 A (Clarion Co., Ltd.),<br>20 December, 2002 (20.12.02),<br>Par. Nos. [0021] to [0059]; Figs. 1 to 5<br>(Family: none) | 1,3,6,8-9<br>4-5,7 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>10 December, 2008 (10.12.08) | Date of mailing of the international search report<br>22 December, 2008 (22.12.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2008/068152 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2002-135765 A  (Matsushita Electric Industrial Co., Ltd.), 10 May, 2002 (10.05.02), Par. Nos. [0098] to [0100]; Figs. 16 to 20 & US 7307655 B1        & EP 1115250 A1 & WO 2000/007373 A1 | 4-5,7 |
| A | JP 2004-64696 A  (Nissan Motor Co., Ltd.), 26 February, 2004 (26.02.04), Par. Nos. [0009] to [0046]; Figs. 1 to 8 (Family: none) | 1-9 |
| A | JP 2002-54320 A  (Yazaki Corp.), 20 February, 2002 (20.02.02), Par. Nos. [0084] to [0112]; Figs. 1 to 4 (Family: none) | 1-9 |

Form PCT/ISA/210 (continuation of second sheet) (April 2007)

**INTERNATIONAL SEARCH REPORT**

International application No.

PCT/JP2008/068152

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

| Box No. III | Observations where unity of invention is lacking (Continuation of item 3 of first sheet) |

This International Searching Authority found multiple inventions in this international application, as follows:
(See extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

International application No.

PCT/JP2008/068152

Continuation of Box No.III of continuation of first sheet(2)

The matter common to the inventions of claims 1-9 is that stated in claim 1.
However, since the matter is stated in the following, the common matter

Document 1: JP 2004-351977 A (Matsushita Electric Industrial Co., Ltd.)
16 December, 2004 (16.12.04), [0031]-[0067], figures 1-17
Document 2: JP 2003-319383 A (Equos Research Co., Ltd.)
07 November, 2003 (07.11.03), [0010]-[0057], figures 1-12
Document 3: JP 2002-367080 A (Clarion Co., Ltd.)
20 December, 2002 (20.12.02), [0021]-[0059], figures 1-5

is not a special technical feature within the meaning of PCT Rule 13.2, second sentence.
Therefore, there is no matter common to all the inventions of claims 1-9 and no technical relationship between these different inventions within the meaning of PCT Rule 13 can be seen, so that the inventions of claims 1-9 do not satisfy the requirement of unity of invention.

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9114979 A

- JP 3099952 A